## Europäisches Patentamt

## European Patent Office

## Office européen des brevets

(11) Veröffentlichungsnummer: **0 463 517 B1**

(12) **EUROPÄISCHE PATENTSCHRIFT**

(45) Veröffentlichungstag der Patentschrift: **03.05.95**

(21) Anmeldenummer: **91109828.3**

(22) Anmeldetag: **15.06.91**

(51) Int. Cl.⁶: **B32B  27/32**

(54) **Nicht siegelbare, transparente Polypropylenfolie mit guten Hafteigenschaften und sehr guten optischen Eigenschaften.**

(30) Priorität: **23.06.90 DE 4020096**

(43) Veröffentlichungstag der Anmeldung:
**02.01.92 Patentblatt  92/01**

(45) Bekanntmachung des Hinweises auf die Patenterteilung:
**03.05.95 Patentblatt  95/18**

(84) Benannte Vertragsstaaten:
**BE DE ES FR GB IT**

(56) Entgegenhaltungen:
**EP-A- 0 264 156**
**EP-A- 0 273 680**
**EP-A- 0 352 463**
**US-A- 3 887 745**

(73) Patentinhaber: **HOECHST AKTIENGESELL-
SCHAFT**

**D-65926 Frankfurt (DE)**

(72) Erfinder: **Murschall, Ursula, Dr.**
**Im Bacchuswinkel 11**
**W-6505 Nierstein (DE)**
Erfinder: **Peiffer, Herbert, Dr.**
**Thüringer Strasse 26**
**W-6500 Mainz-Finthen (DE)**
Erfinder: **Schlögl, Gunter, Dr.**
**Finkenweg 2**
**W-6233 Kelkheim (DE)**

**Beschreibung**

Die Erfindung bezieht sich auf eine mehrschichtige, coextrudierte Polyolefinfolie umfassend eine Basisschicht aus isotaktischen Propylenpolymeren und wenigstens eine Deckschicht aus einem Propylen-Ethylen-Copolymerisat. Die Erfindung betrifft auch die Verwendung einer solchen Folie.

Siegelfähige und nicht siegelfähige Polypropylenfolien sind in zahlreichen Druckschriften beschrieben. Ein bei diesen Folien immer wieder auftretendes Problem ist die Haftung von Beschichtungen, Bedruckungen oder Klebstoffen auf derartigen Folien, die aufgrund des in hohem Maße unpolaren Charakters der Polyolefine meist unzureichend ist. Aufgrund zunehmend sich verschärfender Umweltschutzbestimmungen gewinnen wäßrige Beschichtungssysteme eine immer stärker ins Gewicht fallende Bedeutung, gerade sie führen aber aufgrund ihrer Polarität zu ganz besonderen Schwierigkeiten.

In der EP-A-0 234 758 wird eine spezielle Polypropylenfolie beschrieben, die insbesondere eine gute Beschichtbarkeit mit wäßrigen Beschichtungen besitzen soll. Diese Folie weist allerdings den wesentlichen Mangel auf, daß sie die gute Beschichtbarkeit nur kurz nach der Herstellung besitzt, mit zunehmender Lagerzeit aber verliert.

Bei der Herstellung von Laminaten mit dieser Folie unter Einsatz von wäßrigen Klebern hat sich gezeigt, daß die Aushärtung der Kleber mit der Lagerzeit sehr verzögert wird.

Die EP-A-0 352 463 beschreibt eine coextrudierte Mehrschichtfolie mit einer Basisschicht aus einem Homopolypropylen mit einem Schmelzindex von 16 g/10 min, welche Füllstoffe, Gleitmittel, Antistatika und Antioxodantien enthält. Die Deckschicht der Mehrschichtfolie besteht aus einem statistischen Ethylen-Propylen-Butylen-Polymer mit einem Schmelzindex von 28 g/10 min. Der Ethylengehalt des Terpolymeren beträgt 2,5 %. Die Bedruckbarkeit und das optische Erscheinungsbild, insbesondere der Glanz, dieser Folie sind verbesserungsbedürftig.

Die Aufgabe der vorliegenden Erfindung bestand darin, eine Polypropylenfolie zu schaffen, die neben hervorragenden optischen Eigenschaften, d. h. hohem Glanz und niedriger Trübung, gleichzeitig auch eine gute Langzeitstabilität ihrer Hafteigenschaften gegenüber Bedruckungen, Beschichtungen und Klebstoffen besitzen soll.

Gelöst wird diese Aufgabe durch eine Mehrschichtfolie der eingangs genannten Gattung, deren kennzeichnende Merkmale darin zu sehen sind, daß das Copolymerisat der Deckschicht einen Ethylengehalt im Bereich von 1,5 bis 7,0 Gew.-% besitzt, bezogen auf das Gesamtgewicht des Copolymerisates, daß es peroxidisch abgebaut ist, wobei sein Abbaufaktor A im Bereich von 3 bis 15 liegt und der Schmelzindex nach dem Abbau 6 bis 15 g/10 min beträgt (bei 230 °C und 21,6 N, DIN 53 735) und dieser Schmelzindex größer ist als der Schmelzindex des Polypropylens der Basisschicht, und daß die Deckschicht auf ihrer freien Oberfläche coronabehandelt ist.

Die Schichtdicke der Deckschicht ist erfindungsgemäß kleiner als 0,4 $\mu$m, vorzugsweise im Bereich von 0,1 bis 0,3 $\mu$m.

Die Basisschicht der Mehrschichtfolie besteht aus einem isotaktischen Propylenpolymeren, das um überwiegenden Teil aus Propylen besteht und einen Schmelzpunkt im Bereich von 162 bis 168 °C besitzt. Isotaktisches Polypropylen mit einem n-heptanlöslichen Anteil von 6 Gew.-% und weniger stellt ein bevorzugtes Propylenpolymeres dar. Das Polypropylen der Basisschicht hat einen Schmelzindex von 1,5 bis 5 g/10 min bei einer Belastung von 21,6 N und einer Temperatur von 230 °C (DIN 53 735).

Die Deckschicht besteht aus einem peroxidisch abgebauten Ethylen-Propylen-Copolymerisat, das vorzugsweise einen Ethylengehalt von 2 bis 5 Gew.-% hat. Um die geforderte gute Optik zu erreichen, hat das peroxidisch abgebaute Copolymere einen Abbaufaktor A von 3 bis 15, vorzugsweise von 6 bis 10. Der Schmelzindex des $C_2/C_3$-Ausgangspulvers liegt bei kleiner 3,0 g/10 min, vorzugsweise bei 0,5 bis 1,5 g/10 min (Messung DIN 53 735, 21,6 N Belastung und 230 °C). Das $C_2/C_3$-Ausgangspulver wird durch Zusatz von organischen Peroxiden vor dem Extrudieren auf einen Ganulatschmelzindex von 6 bis 15 g/10 min abgebaut, so daß der Schmelzindex des Copolymeren größer ist als der des Polypropylens der Basisschicht. Der Abbaufaktor A des Ethylen-Propylen-Copolymerisates ist definiert als

$$A = \frac{S_g}{S_p}$$

mit $S_g$ = Schmelzindex des abgebauten Granulats und $S_p$ = Schmelzindex des Ausgangspulvers, wobei der Schmelzindex nach DIN 53 735 (21,6 N Belastung, 230 °C) gemessen wird.

Der peroxidische Abbau bzw. peroxidisch abgebaute oder CR ("controlled rheology") Polypropylen-Homopolymere als solche sind in der Literatur bekannt (vgl. Plastverarbeiter, 38. Jahrgang, 1987, Nr. 4; Polymer Engineering and Science, März 1989, Vol. 29, No. 6; Plastverarbeiter, 36. Jahrgang, 1985, Nr. 11). Derartige peroxidisch abgebaute Polypropylen-Homopolymere kommen insbesondere bei der Spritzgußtechnik und der Faserherstellung zum Einsatz. Peroxidisch abgebaute $C_2/C_3$-Copolymere mit einem $C_2$-Gehalt von 1 bis 2,5 Gew.-% werden teilweise auch für unverstreckte Bürofolien (Organisationssektor) eingesetzt. Wie groß der Abbaufaktor bei diesen Produkten ist, wird aber nicht beschrieben.

Der Ethylengehalt des Copolymeren wird mit Hilfe der $C_{13}$-NMR-Spektroskopie bestimmt. Die Messungen wurden mit einem Kernresonanzspektrometer der Firma Bruker, Modell HX-270 (Deutschland), das mit einem Rechner der Firma Bruker, Typ Bruker Aspect 2000 ausgerüstet war, durchgeführt.

Das zu charakterisierende Ethylen-Propylen-Copolymere wird in einem Lösungsmittelgemisch aus 65 Vol-% Hexachlorbenzol und 35 Vol-% 1,1-Dideuterotetrachlorethan gelöst, so daß eine 10 Gew.-%-Lösung entstand. Als Bezugsstandard wurde Octamethyltetrasiloxan (CMTS) zugegeben. - Das 67,9-MHZ-$C_{13}$-Kernresonanzspektrum wurde bei 130 °C gemessen. Die Auswertung der Spektren erfolgte nach der in J.C. Randall, Polymer Sequence Distribution (Academic Press, New York, 1977) beschriebenen Vorgehensweise.

Überraschenderweise hat sich gezeigt, daß die Kombination der genannten Parameter für das Ethylen-Propylen-Copolymere der Deckschicht sowie die Deckschichtdicke der erfindungsgemäßen Folie in engen Grenzen eingehalten werden müssen, um alle in der Aufgabenstellung genannten Eigenschaften gleichzeitig optimal zu erfüllen.

Der Ethylengehalt des Copolymeren ist für die Oberflächenbehandelbarkeit mittels elektrischer Coronaentladung und für die Langzeitstabilität der Hafteigenschaften von besonderer Bedeutung. Liegt der Ethylengehalt unter 2 Gew.-%, ist die Coronabehandelbarkeit schlecht und das Abklingverhalten der Behandlungsintensität ungünstig.

Liegt der Abbaufaktor des $C_2/C_3$-Copolymeren unter 3, verschlechtern sich die optischen Eigenschaften (Erhöhung der Folientrübung, Erniedrigung des Oberflächenglanzes). Liegt der Abbaufaktor über 15, treten Probleme bei der Verstreckung auf.

Liegt der Schmelzindex des $C_2/C_3$-Pulvers über 3 g/10 min (21,3 N/230 °C), so ergibt sich durch den bevorzugten Abbaufaktor von 6 bis 10 ein zu hoher Schmelzindex des $C_2/C_3$-Granulats. Durch einen zu hohen Viskositätsunterschied zwischen dem Polypropylen-Basismaterial und der Copolymerdeckschicht treten unerwünschte Fließstörungen in der Folie auf.

Liegt die Deckschichtdicke unter 0,1 µm, verschlechtert sich die Coronabehandelbarkeit. Außerdem ist das Langzeitverhalten der Vorbehandlungsintensität ungünstig. Liegt die Deckschichtdicke über 0,4 µm, verschlechtern sich wieder die optischen Eigenschaften (Erhöhung der Trübung, Erniedrigung des Oberflächenglanzes) der Folie. Bei einer Schichtdicke der Deckschicht über 0,4 µm beginnt die Folie siegelfähig zu werden und eignet sich damit nicht für das vorgesehene Anwendungsgebiet.

Um bestimmte Eigenschaften der erfindungsgemäßen Folie noch weiter zu verbessern, können die Schichten geeignete Wirkstoffkomponenten in jeweils wirksamen Mengen enthalten, vorzugsweise Antistatika und/oder Gleitmittel.

Bevorzugte Antistatika sind im wesentlichen geradkettige und gesättigte aliphatische, tertiäre Amine mit einem aliphatischen Rest mit 10 bis 20 Kohlenstoffatomen, die mit 2-hydroxyalkyl-($C_1$-$C_4$)-Gruppen substituiert sind, worunter N,N-bis-(2-hydroxyethyl)-alkylamine mit $C_{10}$-$C_{20}$, vorzugsweise $C_{12}$-$C_{18}$, als Alkylgruppen besonders geeignet sind. Die wirksame Menge an Antistatikum liegt im Bereich von 0,05 bis 1 Gew.-%, bezogen auf die Schicht. Als besonders zweckmäßig hat sich die Ausrüstung der Basisschicht mit 0,1 bis 0,25 Gew.-% eines N,N-bis-Ethoxyalkylamins mit aliphatischen Resten mit 10 bis 22 Kohlenstoffatomen erwiesen.

Als Gleitmittel eignen sich Carbonsäureamide wie Erucasäureamid und Stearinsäureamid oder Polydiorganosiloxane, vorzugsweise Polydialkylsiloxane, insbesondere wird der Deckschicht Gleitmittel in einer Menge von 0,1 bis 1 Gew.-% zugesetzt.

Die Deckschicht oder die Deckschichten enthalten vorzugsweise noch zusätzlich übliche anorganische oder organische Antiblockmittel. Geeignete Antiblockmittel sind anorganische Zusatzstoffe, z.B. Siliciumdioxid und Calciumcarbonat oder dergleichen bzw. organische Zusatzstoffe, z.B. Benzoguanin-Formaldehyd-Copolymere. Wesentlich für das Antiblockmittel ist, daß die mittlere Teilchengröße zwischen 1 und 4 µm liegt. Der Brechungsindex der Antiblockmittel liegt zwischen 1,4 und 1,6. Die Zusatzmenge beträgt 0,1 bis 0,5 Gew.-%, bezogen auf das Gewicht der Deckschichten.

Die Herstellung der erfindungsgemäßen Polyolefinfolie, die zwei- oder dreischichtig sein kann, wobei die Deckschichten gleiche oder unterschiedliche Zusammensetzung aufweisen können, erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung abgekühlt wird, die Folie biaxial gestreckt (orientiert), die biaxial gestreckte Folie thermofixiert und an der zur Coronabehandlung vorgesehenen Oberflächenschicht coronabehandelt wird. Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Zunächst wird also wie beim üblichen Coextrusionsverfahren das Polymere oder die Polymermischung der einzelnen Schichten in einem Extruder komprimiert oder verflüssigt. Die Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50 °C gehalten werden, abgekühlt und verfestigt. Die so erhaltene Folie wird dann längs und quer zur Extrusionsrichtung gestreckt, was zu einer Orientierung der Molekülketten führt. In Längsrichtung wird vorzugsweise 4 bis 7 : 1 und in Querrichtung vorzugsweise 8 bis 10 : 1 gestreckt. Die Längsstreckung wird bei einer Folientemperatur von vorzugsweise 120 bis 140 °C durchgeführt und die Querstreckung vorzugsweise bei 160 bis 175 °C. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. An die biaxiale Streckung der Folie schließt sich ihre Thermofixierung (Wärmebehandlung) an. Dabei wird die Folie etwa 0,5 bis 10 s lang bei einer Temperatur von 150 bis 160 °C gehalten. Die Coronabehandlung erfolgt vorzugsweise mit einer Wechselspannung von etwa 10 000 V und 10 000 Hz, je nach Wunsch ein- oder beidseitig. Die so hergestellte Folie wird in üblicher Weise mit Hilfe einer Aufwickeleinrichtung aufgewickelt und besitzt direkt nach der Herstellung eine Oberflächenspannung auf der behandelten Seite von 36 bis 42 mN/m, vorzugsweise von 38 bis 40 mN/m.

Die erfindungsgemäße Polyolefinmehrschichtfolie eignet sich insbesondere für die Herstellung von Laminaten mit Papier, Pappe, Metallen, metallisierten Kunststoffolien und Kunststoffolien. Sie besitzt nämlich all die wichtigen Eigenschaften, die von Polyolefinfolien im Hinblick auf den Einsatz als laminierbare oder beschichtbare Folie gefordert werden. Sie weist inbesondere auf:
- sehr gute optische Eigenschaften, insbesondere Glanz und Trübung,
- hohe Kratzfestigkeit,
- gute Sofort- und Langzeitbeschichtbarkeitseigenschaften, insbesondere mit wäßrigen Systemen,
- gute Oberflächenbehandelbarkeit und gute Geruchseigenschaften,
- langsames Abklingverhalten der Vorbehandlungsintensität sowie
- gute Weiterverarbeitungseigenschaften.

Die erfindungsgemäße Folie eignet sich außerdem ganz besonders als Trägerfolie für wäßrige Barrierebeschichtungssysteme, z. B. auf Basis von wäßrigen Dispersionen von Polyvinylidenchlorid oder Ethylenvinylalkohol-Copolymeren. Sie läßt sich auch hervorragend mit wäßrigen Druckfarben bedrucken, z. B. mit Zweikomponentenreaktivfarbstoffen.

Aufgrund der guten Oberflächenbehandelbarkeit mit elektrischer Corona und des langsamen Abklingverhaltens ist die erfindungsgemäße Folie außerdem als Trägerfolie für Klebebänder geeignet (Verzicht auf unbequeme und problematische Flammbehandlung).

Die Erfindung wird nun an Beispielen noch näher erläutert:

In den nachstehenden Beispielen und Vergleichsbeispielen handelt es sich jeweils um eine biaxial orientierte (Längsstreckverhältnis 5:1, Querstreckverhältnis 10:1) Polyolefinfolie mit einer Basisschicht und zwei Deckschichten, wobei die Basisschicht aus einem isotaktischen Polypropylen mit einem n-heptanlöslichen Anteil von 4 Gew.-%, mit einem Schmelzpunkt von 165 °C und einem Schmelzindex von 3,5 g/10 min bei 230 °C und 21,6 N Belastung (DIN 53 735) als Hauptkomponente besteht. Die Basisschicht ist etwa 12 $\mu$m dick, und die beiden Deckschichten, welche die Basisschicht umgeben, sind jeweils in der Tabelle 1 angegeben. Die dreischichtigen Polyolefinfolien sind nach dem bekannten Coextrusionsverfahren hergestellt worden.

Alle Schichten enthalten zur Stabilisierung 0,1 Gew.-% Pentaerythrityl-Tetrakis-3-(3,5-ditertiärbutyl-4-hydroxyphenyl)-propionat (Irganox 1010[R]) sowie zur Neutralisierung saurer Katalysatorreste 0,05 Gew.-% Calciumstearat. Die Basisschicht enthält weiterhin 0,2 Gew.-% an N,N-Bisethoxyalkylamin (Alkylrest $C_{10}$-$C_{22}$).

Zur Charakterisierung der Rohstoffe und Folien wurden folgende Meßmethoden benutzt:

Ethylengehalt und Verteilungsfaktor:

Wie eingangs bereits beschrieben.

EP 0 463 517 B1

Schmelzflußindex:

DIN 53 735 bei 230 °C und 21,6 N Belastung.

Trübung:

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit kleiner $\leq$ 15% = sehr gut, $\geq$ 15% bis 25% = mäßig und $\geq$ 25% = schlecht.

Glanz:

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20°) erfolgt mit $\geq$ 115 = sehr gut, $\leq$ 115 bis 100 = mäßig und $\leq$ 100 = schlecht.

Kratzfestigkeit bzw. Kratzempfindlichkeit:

Die Kratzfestigkeit wird in Anlehnung an DIN 53 754 bestimmt.
Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut bezeichnet, wenn die Trübungszunahme 20 % beträgt, mit mäßig, wenn die Trübungszunahme bei 20 bis 25 % liegt, und mit schlecht bei Trübungszunahmen von größer 25 %.

Abfallverhalten und Geruch:

Die Coronabehandlung wurde so ausgeführt, daß die behandelte Folienoberfläche jeweils eine Behandlungsintensität von 39 mN/m direkt nach der Behandlung besaß. Die Behandlungsintensität wurde mittels der sogenannten Tintenmethode (DIN 53 364) bestimmt.
Die Behandlungsintensitätsmessung wurde im Abstand von jeweils 14 Tagen wiederholt. Als sehr gut wurde das Abfallverhalten bezeichnet, wenn die Behandlungsintensität nach vier Monaten noch mindestens 37 mN/m betrug ($\Delta$B $\leq$ 2 mN/m). Als schlecht wurde das Abfallverhalten bezeichnet, wenn die Behandlungsintensität $\leq$ 35 mN/m betrug ($\Delta$B $\geq$ 4 mN/m). Der Geruch der Folien wurde mittels Geruchsprüfung beurteilt.

Geruch:

Aus der zu beurteilenden Folie wird ein ca. 1 cm dicker Folienstapel (DIN A 4) hergestellt, der in A1-Folie eingeschlagen wird. Zur Beurteilung des Geruchs wird der Folienstapel nach 2 Tagen Lagerung aufgeblättert und zwischen den Folienlagen gerochen.

Geruchsnoten:

+ +      geringer Geruch
+ -      merkbarer Geruch
--      deutlicher Geruch

5

Coronabehandelbarkeit:

Die Folien wurden unter gleichen Bedingungen einer Coronabehandlung unterzogen. Während bei Beispiel 1 sowie den Vergleichsbeispielen VB 1 und VB 2 Behandlungsintensitäten von 39 mN/m erreicht wurden, zeigen VB 3 bis VB 5 lediglich eine Intensität von 37 mN/m und das VB 6 lediglich eine Behandlungsintensität von 36 mN/m.

Bedruckbarkeit:

Die Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband keine Farben abgelöst werden, so wurde die Farbhaftung mit sehr gut bezeichnet. Bei geringer Farbablösung wurde die Farbhaftung mit mäßig und bei deutlicher Farbablösung mit schlecht beurteilt.

Verklebbarkeit mit wäßrigen Klebern/Weiterverarbeitung:

Zur Beurteilung der Verklebbarkeit mit wäßrigen Klebern bzw. der Weiterverarbeitungseigenschaften wurden Laminate mit Pergamyn-Papier (Flächengewicht 40 g/m$^2$) hergestellt. Als Kleber wurde der wäßrige reaktive 2-Komponentenkleber Aquabond A + C der Firma Morton Thiokol GmbH, Wikolin Polymer Division (Deutschland) eingesetzt.

Die Laminate wurden 10 Tage nach Herstellung der Folien sowie 6 Monate nach Herstellung der Folien gefertigt. Als sehr gut wurden Laminate beurteilt, bei denen die Verbundfestigkeit direkt nach Produktion die Festigkeit des eingesetzten Papiers erreichten. Als mäßig wurden die Laminate beurteilt, die längere Zeit brauchten.

Als schlecht wurden Laminate bezeichnet, die nicht die Festigkeit des Papiers erreichten.

Der Aufbau der Beispielfolien und der Vergleichsfolien geht aus Tabelle 1 hervor. Die überlegenen Eigenschaften der erfindungsgemäßen Folien gehen aus Tabelle 2 hervor.

Tabelle 1: Beispiele und Vergleichsbeispiele

| Beispiel 1 | VB 1 | VB 2 | VB 3 |
|---|---|---|---|
| $C_2/C_3$-Copolymerisat | $C_2/C_3$-Copolymerisat | $C_2/C_3$-Copolymerisat | $C_2/C_3$-Copolymerisat |
| $C_2$: 4 Gew.-% | $C_2$: 4 Gew.-% | $C_2$: 4 Gew.-% | $C_2$: 1 Gew.-% |
| $C_3$: 96 Gew.-% | $C_3$: 96 Gew.-% | $C_3$: 96 Gew.-% | $C_3$: 99 Gew.-% |
| $i_{2,16}$: 8 g/10 min | $i_{2,16}$: 8 g/10 min | $i_{2,16}$: 8 g/10 min | $i_{2,16}$: 6 g/10 min |
| Abbaufaktor A: 8 | Abbaufaktor A: 8 | Abbaufaktor A: 2 | Abbaufaktor A: 2 |
| $T_M$: 138 °C | $T_M$: 138 °C | $T_M$: 139 °C | $T_M$: 163 °C |
| Schichtdicke: 0,2 $\mu$m | Schichtdicke: 0,6 $\mu$m | Schichtdicke: 0,2 $\mu$m | Schichtdicke: 0,6 $\mu$m |

Fortsetzung Tabelle 1: Beispiele und Vergleichsbeispiele

| VB 4 | VB 5 | VB 6 |
|---|---|---|
| $C_2/C_3$-Copolymerisat<br>$C_2$: 1 Gew.-%<br>$C_3$: 99 Gew.-%<br>$i_{2,16}$: 6 g/10 min<br>Abbaufaktor A: 2<br>$T_M$: 163 °C<br>Schichtdicke: 0,2 /um | $C_2/C_3$-Copolymerisat<br>$C_2$: 1 Gew.-%<br>$C_3$: 99 Gew.-%<br>$i_{2,16}$: 8 g/10 min<br>Abbaufaktor A: 8<br>$T_M$: 162 °C<br>Schichtdicke: 0,2 /um | Polypropylen<br><br><br>$i_{2,16}$: 8 g/10 min<br>Abbaufaktor A: 8<br>$T_M$: 165 °C<br>Schichtdicke: 0,2 /um |

EP 0 463 517 B1

**Tabelle 2**

| | Glanz | Trübung | Oberflächen-behandelbar-keit | Bedruckbarkeit/Ver-klebbarkeit Kurzzeit | Bedruckbarkeit/Ver-klebbarkeit Langzeit | Abfallverhalten der Coronabe-handlung | Nichtsiegel-barkeit erfüllt |
|---|---|---|---|---|---|---|---|
| Beispiel 1 | ++ | ++ | ++ | ++ | ++ | ++ | ja |
| VB 1 | +- | +- | ++ | ++ | ++ | ++ | nein |
| VB 2 | — | — | ++ | ++ | ++ | ++ | ja |
| VB 3 | — | — | +- | +- | — | — | ja |
| VB 4 | +- | +- | +- | +- | — | — | ja |
| VB 5 | ++ | ++ | +- | +- | — | — | ja |
| VB 6 | ++ | ++ | — | +- | — | — | ja |

++ = sehr gut
+- = gut
-+ = mäßig
— = schlecht

## Patentansprüche

1. Mehrschichtige, coextrudierte Polyolefinfolie umfassend eine Basisschicht aus isotaktischen Propylenpolymeren und wenigstens eine Deckschicht aus einem Propylen-Ethylen-Copolymerisat, dadurch gekennzeichnet, daß das Copolymerisat der Deckschicht einen Ethylengehalt im Bereich von 1,5 bis 7,0 Gew.-% besitzt, bezogen auf das Gesamtgewicht des Copolymerisates, daß es peroxidisch abgebaut ist, wobei sein Abbaufaktor A, der als Quotient des Schmelzindex des abgebauten Granulets und dem Schmelzindex des Ausgangspulvers (DIN 53 735, 21,6 N Belestung, 230 °C) definiert ist, im Bereich von 3 bis 15 liegt und der Schmelzindex nach dem Abbau 6 bis 15 g/10 min beträgt (bei 230 °C und 21,6 N, DIN 53 735) und dieser Schmelzindex größer ist als der Schmelzindex des Polypropylens der Basisschicht, und daß die Deckschicht auf ihrer freien Oberfläche coronabehandelt ist.

2. Folie nach Anspruch 1, dadurch gekennzeichnet, daß die Schichtdicke der Deckschicht kleiner als 0,4 $\mu$m ist.

3. Folie nach Anspruch 1 oder 2, dadurch gekennzeichnet, daß das peroxidisch abgebaute Ethylen-Propylen-Copolymerisat der Deckschicht einen Ethylengehalt von 2 bis 5 Gew.-% und einen Abbaufaktor A von 6 bis 10 hat.

4. Folie nach einem der Ansprüche 1 bis 3, dadurch gekennzeichnet, daß sie Antistatika, vorzugsweise geradkettige und gesättigte aliphatische, tertiäre Amine mit einem aliphatischen Rest mit 10 bis 20 Kohlenstoffatomen, die mit 2-hydroxyalkyl-($C_1$-$C_4$)-Gruppen substituiert sind, z. B. N,N-bis-(2-hydroxy-ethyl)-alkylamine mit $C_{10}$-$C_{20}$, vorzugsweise $C_{12}$-$C_{18}$, als Alkylgruppen enthält.

5. Folie nach Anspruch 4, dadurch gekennzeichnet, daß die wirksame Menge an Antistatikum im Bereich von 0,05 bis 1 Gew.-%, bezogen auf das Gewicht der Schicht, liegt.

6. Folie nach einem der Ansprüche 1 bis 5, dadurch gekennzeichnet, daß die Deckschicht Gleitmittel, in einer Menge von 0,1 bis 1,0 Gew.-% enthält.

7. Folie nach einem der Ansprüche 1 bis 6, dadurch gekennzeichnet, daß die Deckschicht oder die Deckschichten anorganische oder organische Antiblockmittel wie z. B. Siliciumdioxid, Calciumcarbonat oder Benzoguanin-Formaldehyd-Copolymere mit einer mittleren Teilchengröße zwischen 1 und 4 $\mu$m und in einer Menge von 0,1 bis 0,5 Gew.-%, bezogen auf das Gewicht der Deckschichten, enthält.

8. Verwendung einer Folie nach einem der Ansprüche 1 bis 7 zur Herstellung von Laminaten.

9. Verwendung einer Folie nach einem der Ansprüche 1 bis 7 als Trägerfolie für wässrige Barrierebeschichtungen.

10. Verwendung einer Folie nach einem der Ansprüche 1 bis 7 als Trägerfolie für Klebebänder.

**Claims**

1. A multilayered, coextruded polyolefin film comprising a base layer of isotactic propylene polymers and at least one top layer of a propylene-ethylene copolymer, wherein the copolymer of the top layer has an ethylene content in the range from 1.5 to 7.0 % by weight, based on the total weight of the copolymer, wherein said copolymer has been peroxide-degraded, whereby its degradation factor A, which is defined as the quotient resulting from the melt flow index of the degraded granulate and the melt flow index of the starting powder (DIN 53 735, load 21.6 N, 230 °C), is in the range from 3 to 15 and the melt flow index following degradation is 6 to 15 g/10 min (at 230 °C and 21.6 N, DIN 53 735) and said melt flow index is superior to the melt flow index of the polypropylene of the base layer, and wherein the free surface of the top layer has been corona-treated.

2. A film as claimed in claim 1, wherein the thickness of the top layer is less than 0.4 $\mu$m.

3. A film as claimed in claim 1 or 2, wherein the peroxide-degraded ethylene-propylene copolymer of the top layer has an ethylene content of from 2 to 5% by weight, and a degradation factor A of from 6 to 10.

4. A film as claimed in any one of claims 1 to 3, which contains antistatics, preferably straight-chain and saturated aliphatic, tertiary amines containing an aliphatic radical having from 10 to 20 carbon atoms and being substituted by 2-hydroxy($C_1$-$C_4$) alkyl groups, for example N, N-bis (2-hydroxyethyl) alkylamines containing $C_{10}$-$C_{20}$-, preferably $C_{12}$-$C_{18}$-alkyl groups.

10

5. A film as claimed in claim 4, wherein the effective amount of antistatic is in the range from 0.05 to 1% by weight, based on the weight of the layer.

6. A film as claimed in any one of claims 1 to 5, wherein the top layer contains lubricants in an amount of from 0.1 to 1.0% by weight.

7. A film as claimed in any one of claims 1 to 6, wherein the top layer or layers contains inorganic or organic antiblocking agents, such as, for example, silicon dioxide, calcium carbonate or benzoguanine-formaldehyde copolymers having a mean particle size of between 1 and 4 $\mu$m and in an amount of from 0.1 to 0.5% by weight, based on the weight of the top layers.

8. The use of a film as claimed in any one of claims 1 to 7 for the production of laminates.

9. The use of a film as claimed in any one of claims 1 to 7 as a base film for aqueous barrier coatings.

10. The use of a film as claimed in any one of claims 1 to 7 as a base film for adhesive tapes.

**Revendications**

1. Pellicule de polyoléfine multicouche coextrudée, comprenant une couche de base en polymère de propylène isotactique et au moins une couche de recouvrement en un copolymère éthylène/ propylène, caractérisée en ce que le copolymère de la couche de recouvrement a une teneur en éthylène dans la plage allant de 1,5 à 7,0 % en poids, par rapport au poids total du copolymère, en ce qu'il est dégradé par des peroxydes, son facteur de dégradation A, qui est défini comme le quotient de l'indice de fluidité à chaud du produit granulé dégradé et de l'indice de fluidité à chaud de la poudre initiale (DIN 53 735, sous charge de 21,6 N, à 230°C) se situant dans la plage allant de 3 à 15, et l'indice de fluidité à chaud après la dégradation allant de 6 à 15 g/10 min (à 230°C et sous 21,6 N, DIN 53 735) et cet indice de fluidité à chaud étant supérieur à l'indice de fluidité à chaud du polypropylène de la couche de base, et en ce que la couche de recouvrement est traitée par effet couronne sur sa surface libre.

2. Pellicule selon la revendication 1, caractérisée en ce que l'épaisseur de la couche de recouvrement est inférieure à 0,4 $\mu$m.

3. Pellicule selon la revendication 1 ou 2, caractérisée en ce que le copolymère éthylène/propylène de la couche de recouvrement, dégradé par un peroxyde, a une teneur en éthylène de 2 à 5 % en poids et un facteur de dégradation A de 6 à 10.

4. Pellicule selon l'une des revendications 1 à 3, caractérisé en ce qu'elle contient des agents antistatiques, de préférence des amines tertiaires aliphatiques saturées et à chaîne droite, comportant un radical aliphatique ayant de 10 à 20 atomes de carbone, qui sont substitués par des groupes 2-hydroxyalkyle en $C_1$-$C_4$, par exemple des N,N-bis-(2-hydroxyéthyl)-alkylamines à groupes alkyle en $C_{10}$-$C_{20}$, de préférence en $C_{12}$-$C_{18}$.

5. Pellicule selon la revendication 4, caractérisée en ce que la quantité efficace d'agent antistatique se situe dans la plage allant de 0,05 à 1 % en poids, par rapport au poids de la couche.

6. Pellicule selon l'une des revendications 1 à 5, caractérisée en ce que la couche de recouvrement contient des agents de glissement, en une proportion de 0,1 à 1,0 % en poids.

7. Pellicule selon l'une des revendications 1 à 6, caractérisée en ce que la couche de recouvrement ou les couches de recouvrement contient(tiennent) des agents antiadhérence de contact minéraux ou organiques, comme par exemple du dioxyde de silicium, du carbonate de calcium ou des copolymères benzoguanine/formaldéhyde ayant une taille moyenne de particules comprise entre 1 et 4 $\mu$m, en une proportion allant de 0,1 à 0,5 %, par rapport au poids des couches de recouvrement.

8. Utilisation d'une pellicule selon l'une des revendications 1 à 7, pour la fabrication de stratifiés.

9. Utilisation d'une pellicule selon l'une des revendications 1 à 7, en tant que pellicule de support pour revêtements faisant barrière à l'eau.

10. Utilisation d'une pellicule selon l'une des revendications 1 à 7, en tant que pellicule de support pour rubans adhésifs.